# EUROPEAN PATENT APPLICATION

(11) **EP 4 730 467 A1**
(43) Date of publication of application: **22.04.2026**
(21) Application number: 24890132.4
(22) Date of filing: 03.07.2024
(51) Int. Cl.: H01M 10/0569, H01M 10/052

(54) **ELECTROLYTE FOR LITHIUM METAL SECONDARY BATTERY, SECONDARY BATTERY, AND ELECTRIC DEVICE**

(30) Priority: 17.11.2023 CN 202311542739
(71) Applicant: Contemporary Amperex Technology Co., Limited, Ningde, Fujian 352100 (CN)
(72) Inventor: WANG, Yuchun, Ningde, Fujian 352100 (CN); GE, Xiaoming, Ningde, Fujian 352100 (CN); WANG, Hansen, Ningde, Fujian 352100 (CN); ZHANG, Rupeng, Ningde, Fujian 352100 (CN); WAN, Pan, Ningde, Fujian 352100 (CN); FENG, Fuxiang, Ningde, Fujian 352100 (CN)
(74) Representative: Kraus & Lederer PartGmbB
(86) International application number: PCT/CN2024/103401
(87) International publication number: WO 2025/102763

(57) **Abstract**

Disclosed are an electrolyte solution for a lithium metal secondary battery, a secondary battery and an electrical device. The electrolyte solution includes a lithium salt, an organic solvent and a diluent. The organic solvent includes at least one of a compound represented by Formula (I) or a compound represented by Formula (II). In Formula (I), R₁ and R₂ are each independently selected from C1-C10 alkyl, and k is an integer selected from 1-3. In Formula (II), X, Y, and Z are each independently selected from O or S, where for at least two of X, Y, and Z, one is O and the other is S; R₃ and R₄ are each independently selected from C1-C10 alkyl; and m and n are each independently an integer selected from 1-3.

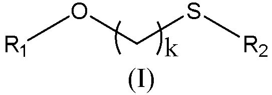

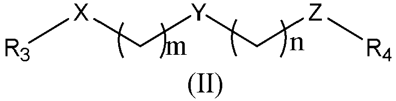

## Description

### CROSS-REFERENCE TO RELATED APPLICATIONS

The present disclosure is based on the Chinese Patent Application No. 202311542739.0, filed on November 17, 2023 and entitled "ELECTROLYTE SOLUTION FOR LITHIUM METAL SECONDARY BATTERY, SECONDARY BATTERY AND ELECTRICAL DEVICE" and claims priority to the Chinese Patent Application. The entire content of the Chinese Patent Application is incorporated in the present disclosure by reference.

### TECHNICAL FIELD

The present disclosure relates to the technical field of batteries, and in particular to an electrolyte solution for a lithium metal secondary battery, a secondary battery, and an electrical device.

### BACKGROUND

In recent years, as secondary batteries are increasingly widely used, secondary batteries have been widely used in energy storage power systems such as hydroelectric power plants, thermal power plants, wind power plants, and solar power plants, and various fields such as electric tools, electric bicycles, electric motorcycles, electric vehicles, military equipment, and aerospace. Due to the great development of secondary batteries, higher requirements have been put forward for their performance such as energy density, cycling performance, and safety performance.

Alkali metal batteries with negative electrodes being lithium, sodium, potassium and an alloy thereof are one of the most promising energy storage devices at present due to their low reduction potential and high theoretical energy density. However, the current electrolyte solution easily forms a loose and unstable solid electrolyte interface (SEI) film with the negative electrode of the alkali metal battery, affecting the battery cycling performance. Therefore, how to improve the performance of the electrolyte solution has become an urgent problem to be solved in the art.

### SUMMARY

The present disclosure is made in view of the above problems, and an object is to provide an electrolyte solution for a lithium metal secondary battery, thereby promoting the formation of a stable SEI film, increasing the boiling point of the electrolyte solution, and further improving the cycling performance of the battery. The present disclosure also provides a secondary battery and an electrical device.

In order to achieve the above-mentioned object, the present disclosure provides, in a first aspect, an electrolyte solution for a lithium metal secondary battery, including a lithium salt, an organic solvent and a diluent; where the organic solvent includes at least one of a compound represented by Formula (I) or a compound represented by Formula (II); 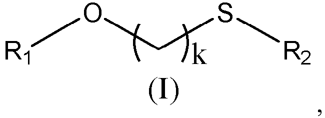 where
in Formula (I), R₁ and R₂ are each independently selected from C1-C10 alkyl, and k is an integer selected from 1-3; 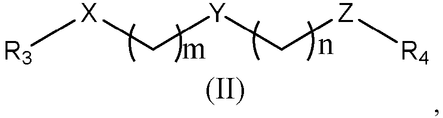 where
in Formula (II), X, Y, and Z are each independently selected from O or S, where for at least two of X, Y, and Z, one is O and the other is S; R₃ and R₄ are each independently selected from C1-C10 alkyl, and m and n are each independently an integer selected from 1-3.

The organic solvent in the embodiment of the present disclosure is a thioether solvent containing at least one oxygen atom and at least one sulfur atom. The sulfur atom can donate its 3p lone pair electrons, exhibit nucleophilicity, and interact with lithium ions. Moreover, the electronegativity of the sulfur atom is lower than that of the oxygen atom, so the Li-S interaction will be weaker than the Li-O interaction, thereby reducing the solvation effect of the organic solvent on Li and increasing the anion coordination number in the Li solvation structure, thereby improving the stability of the SEI film.

In any embodiment, in Formula (I), R₁ and R₂ are each independently selected from C1-C6 alkyl, optionally, selected from C1-C4 alkyl; and
in Formula (II), R₃ and R₄ are each independently selected from C1-C6 alkyl, optionally, selected from C1-C4 alkyl. The selection of the above groups is conducive to the formation of a further stable SEI film, thereby improving the cycling performance of the battery.

In any embodiment, the organic solvent includes at least one of the compounds represented by Formula (I), and in Formula (I), k is 2, R₁ and R₂ are each independently selected from C1-C4 alkyl.

In any embodiment, the organic solvent includes at least one of the following compounds:

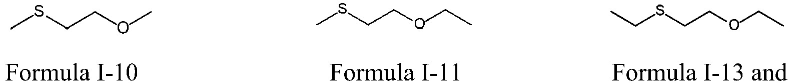

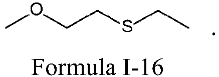

In this way, the sulfur atom and the oxygen atom are separated by two carbon atoms, which is a moderate distance, so that the organic solvent can achieve a higher ionic conductivity after combining with the lithium ions.

In any embodiment, the concentration of the lithium salt in the electrolyte solution is 0.1-4 mol/L, optionally 1-3 mol/L. By controlling the concentration of the lithium salt in the electrolyte solution within the above range, the diffusion of lithium ions can be facilitated, so that the electrolyte solution thus provided has a higher ion conductivity.

In any embodiment, in the electrolyte solution, the volume ratio of the organic solvent to the diluent is σ, wherein 1 : 9 ≤ σ ≤ 9 : 1; optionally, 2 : 5 ≤ σ ≤ 5 : 2. Adjusting the ratio of organic solvent and diluent can facilitates the reduction of the solvation effect, increase the anion coordination number, and achieve the purpose of adjusting the solvation structure, thereby improving the stability of the SEI film and further improving the cycling performance of the battery.

In any embodiment, the lithium salt includes at least one of lithium bis(fluorosulfonyl)imide, lithium hexafluorophosphate, lithium tetrafluoroborate, lithium hexafluoroarsenate, lithium bis(trifluoromethanesulfonyl)imide, lithium trifluoromethanesulfonate, lithium difluorophosphate, lithium bis(oxalato)borate, lithium difluoro(oxalato)borate, lithium difluorobis(oxalato)phosphate and lithium tetrafluoro(oxalato)phosphate. The above lithium salt is convenient and easy to obtain, and has a high solubility in the electrolyte solution, so that the electrolyte solution has a high conductivity, thereby endowing the battery with good cycling performance.

In any embodiment, the diluent includes at least one of fluorine-containing alkanes, ethers and silane compounds; optionally, the diluent includes at least one of decafluoropentane, 1,1,2,2-tetrafluoroethyl-2,2,3,3-tetrafluoropropyl ether, (trifluoromethyl)trimethylsilane and (difluoromethyl)dimethylsilane. Selecting the above diluents facilitates to the effective adjustment of the solvation structure, improving the coulombic efficiency, and reducing the viscosity of the electrolyte solution to improve the cycling performance of the battery.

In any embodiment, the boiling point of the organic solvent is in a range of 40-150°C, under 1 atm. When the organic solvent has a higher boiling point, it helps the electrolyte solution containing the organic solvent to also achieve a higher boiling point, so that the electrolyte solution does not easily volatilize and can also results in better cycling performance.

In any embodiment, the boiling point of the electrolyte solution is higher than 105°C; optionally, higher than 115°C; optionally, higher than 125°C, under 1 atm. In the embodiments of the present disclosure, the electrolyte solution has a relatively high boiling point and is not easily volatile, so that the electrolyte solution has improved thermal stability and cycling performance, thereby broadening the operating temperature range of the electrolyte solution.

A second aspect of the present disclosure further provides a lithium metal secondary battery, including an electrolyte solution of the first aspect of the present disclosure. The electrolyte solution of the embodiment of the present disclosure can reduce the solvation of Li, increase the coordination number of anions in the Li solvation structure, and further increase the probability of anions participating in the film-forming reaction, thereby improving the stability of the SEI film. Moreover, compared with the electrolyte solution using an ether solvent containing no sulfur atom, the electrolyte solution of the embodiment of the present disclosure also has a higher boiling point and thermal stability, which broadens the operating temperature range of the electrolyte solution. Furthermore, the electrolyte solution can improve the cycling performance of the lithium metal secondary battery.

In any embodiment, the lithium metal secondary battery further includes a negative electrode plate, the negative electrode plate includes a negative electrode current collector and a negative electrode film layer disposed on at least one side of the negative electrode current collector, and the negative electrode film layer includes elemental lithium and/or a lithium alloy. By including elemental lithium and/or a lithium alloy in the negative electrode film layer, the battery can have a lower reduction potential and/or a higher theoretical energy density.

A third aspect of the present disclosure further provides an electrical device, including a lithium metal secondary battery of the second aspect of the present disclosure.

The organic solvent in the electrolyte solution for a lithium metal secondary battery of the embodiment of the present disclosure can reduce the solvation of Li, increase the coordination number of anions in the Li solvation structure, and further increase the probability of anions participating in the film-forming reaction, thereby improving the stability of the SEI film. Moreover, compared with the electrolyte solution using an ether solvent containing no sulfur atom, the electrolyte solution of the embodiment of the present disclosure also has a higher boiling point and thermal stability, which broadens the operating temperature range of the electrolyte solution. Furthermore, the electrolyte solution can improve the cycling performance of the lithium metal secondary battery.

### BRIEF DESCRIPTION OF THE DRAWINGS

FIG. 1 shows a schematic diagram of a battery cell according to an embodiment of the present disclosure.
FIG. 2 shows an exploded view of the battery cell according to an embodiment of the present disclosure as shown in FIG. 1.
FIG. 3 shows a schematic view of a battery module according to an embodiment of the present disclosure.
FIG. 4 shows a schematic diagram of a battery pack according to an embodiment of the present disclosure.
FIG. 5 shows an exploded view of the battery pack according to an embodiment of the present disclosure as shown in FIG. 4.
FIG. 6 shows a schematic view of an electrical device using a secondary battery as a power source according to an embodiment of the present disclosure.

Description of reference numerals:
1: Battery pack; 2: Upper box; 3: Lower box; 4: Battery module; 5: Secondary battery; 51: Case; 52: Electrode assembly; and 53: Top cover assembly.

### DETAILED DESCRIPTION

Hereinafter, embodiments of the electrolyte solution for a lithium metal secondary battery, the lithium metal secondary battery, and the electrical device disclosed in the present disclosure will be described in detail with reference to the drawings as appropriate. However, there may be situations where unnecessary detailed explanations are omitted. For example, there are situations where detailed explanations of well-known matters and repeated explanations of actually the same structure are omitted. Thus, the following descriptions do not become unnecessarily lengthy, which facilitates understanding by those skilled in the art. In addition, the drawings and subsequent descriptions are provided for those skilled in the art to fully understand the present disclosure, and are not intended to limit the subject matter recited in the claims. All documents cited in the present disclosure, including publications, patents, and patent applications, are hereby incorporated by reference in their entirety.

The "ranges" disclosed in the present disclosure are defined in the form of lower and upper limits, with a given range being defined by the selection of a lower limit and an upper limit defining the boundaries of the particular range. The range defined in this way may include or exclude end values, and may be arbitrarily combined, that is, any lower limit can be combined with any upper limit to form a range. For example, if ranges of 60-120 and 80-110 are listed for a particular parameter, it is to be understood that ranges of 60-110 and 80-120 are also contemplated. Additionally, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In the present disclosure, unless stated otherwise, the numerical range "a-b" represents an abbreviated representation of any combination of real numbers between a to b, where both a and b are real numbers. For example, the numerical range "0-5" means that all real numbers between 0 and 5 are listed herein, and "0-5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, 12, or the like.

Unless otherwise specified, all the embodiments and optional embodiments of the present disclosure can be combined with each other form new technical solutions.

Unless otherwise specified, all technical features and optional technical features of the present disclosure can be combined with each other to form new technical solutions.

Unless otherwise specified, all the steps in the present disclosure can be performed in the order described or in a random order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

Lithium metal batteries generally refer to batteries which include negative electrodes of a metal lithium and an alloy thereof. Due to their low reduction potential and high theoretical energy density, such batteries are one of the most promising energy storage devices currently.

However, the application of lithium metal batteries is seriously hindered by their high reactivity, poor safety and cycling performance.

During the first cycle of the battery, the electrolyte solution reacts with the electrode to form a passivation layer, the SEI film. A good SEI will block the subsequent reaction between the electrolyte solution and the electrode material. Moreover, the morphology is relatively uniform and dense, and the electrochemical and other chemical properties are stable.

However, during the cycling of the lithium metal battery, the organic solution react with the positive electrode of the battery and often form an organic-rich, loose and unstable SEI film. The film is prone to rupture during the cycle, resulting in irreversible loss of lithium metal and reduced coulombic efficiency.

In order to improve the stability of the SEI film, it is necessary to increase the content of inorganic elements such as F, S, N, P and so on in the SEI film. One of the methods is to increase the coordination number of anions in the lithium ion solvation structure, thereby increasing the probability of anions participating in the film-forming reaction. The currently widely used method is to combine an ether solvent with a diluent to form a local high-concentration solution. Although the use of an ether solvent in a lithium metal battery can improve the compatibility of the organic solvent with the electrode, the ether solvent generally interact strongly with Li and cannot further increase the anion coordination number. Moreover, the ether solvent mostly has a low boiling point, which results in the electrolyte solution being volatile and limits the further application of the electrolyte solution.

Based on this, the present disclosure provides an electrolyte solution for a lithium metal secondary battery, a lithium metal secondary battery and an electrical device.

### Electrolyte solution for lithium metal secondary battery

The present disclosure provides an electrolyte solution for a lithium metal secondary battery, where the electrolyte solution includes a lithium salt, an organic solvent, and a diluent.

The organic solvent includes at least one of a compound represented by Formula (I) or a compound represented by Formula (II).

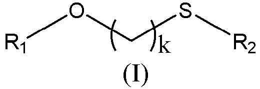

In Formula (I), R₁ and R₂ are each independently selected from C1-C10 alkyl, and k is an integer selected from 1-3.

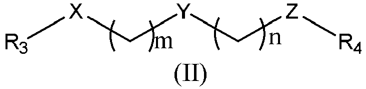

In Formula (II), X, Y, and Z are each independently selected from O or S, where for at least two of X, Y, and Z, one is O and the other is S; R₃ and R₄ are each independently selected from C1-C10 alkyl, and m and n are each independently an integer selected from 1-3.

The organic solvent in the embodiment of the present disclosure is a thioether solvent containing at least one oxygen atom and at least one sulfur atom. The sulfur atom can donate its 3p lone pair electrons, exhibit nucleophilicity, and interact with lithium ions. Moreover, the electronegativity of sulfur atoms is lower than that of oxygen atoms, so the Li-S interaction will be weaker than the Li-O interaction, thereby achieving the function of reducing the solvation effect and further increasing the anion coordination number, thereby improving the stability of the SEI film.

By quantum chemical calculations, the organic solvents of the embodiments of the present disclosure have good reduction resistance.

The ordinary ether solvents (which do not contain any sulfur atoms) generally have a low boiling point, which seriously affects the operating temperature range of the battery. The organic solvent of the embodiments of the present disclosure contains at least one sulfur atom. The ether solvent substituted with at least one sulfur atom shows a significant increase in boiling point and enhanced volatility resistance. Moreover, the organic solvent molecule also includes at least one oxygen atom that is not replaced by a sulfur atom, so the stability of the organic solvent molecule is good. This is because if all the oxygen atoms in the ether solvent are replaced by sulfur atoms, the molecular stability will be weakened.

Although the mechanism is not clear, the inventors of the present disclosure unexpectedly discovered that by including the above-mentioned organic solvent, the electrolyte solution of the embodiments of the present disclosure can reduce the solvation effect of lithium ions, increase the coordination number of anions in the lithium ion solvation structure, and thus increase the probability of anions participating in the film-forming reaction, thereby improving the stability of the SEI film. Moreover, compared with the electrolyte solution using an ether solvent containing no sulfur atom, the electrolyte solution of the embodiment of the present disclosure has a higher boiling point and thermal stability, which broadens the operating temperature range of the electrolyte solution. Furthermore, the electrolyte solution can improve the cycling performance of the lithium metal battery.

Herein, "C1-C10 alkyl" refers to a straight-chain or branched-chain aliphatic hydrocarbon having 1 to 10 carbon atoms. Optionally, C1-C10 alkyl includes straight-chain or branched-chain C1-C8 alkyl having 1 to 8 carbon atoms. Optionally, C1-C10 alkyl includes straight-chain or branched-chain C1-C6 alkyl having 1 to 6 carbon atoms. Optionally, C1-C10 alkyl includes straight-chain or branched-chain C1-C4 alkyl having 1 to 4 carbon atoms. Optionally, C1-C10 alkyl includes C1-C2 alkyl having 1 to 2 carbon atoms. Examples of C1-C10 alkyl include, but are not limited to, methyl, ethyl, n-propyl, isopropyl, n-butyl, sec-butyl, tert-butyl, n-pentyl, sec-pentyl, hexyl, heptyl, octyl, iso-octyl, nonyl, and decyl.

k is an integer selected from 1-3. For example, k can be 1, 2, or 3. m and n are each independently an integer selected from 1-3. For example, m can be 1, 2 or 3; n can be 1, 2 or 3.

In some embodiments, in Formula (I), R₁ and R₂ are each independently selected from C1-C6 alkyl, optionally, selected from C1-C4 alkyl. For example, R₁ and R₂ are each independently selected from methyl, ethyl, n-propyl, isopropyl, n-butyl, tert-butyl, sec-butyl, n-pentyl, sec-pentyl or hexyl, etc. In Formula (II), R₃ and R₄ are each independently selected from C1-C6 alkyl, optionally, selected from C1-C4 alkyl. For example, R₃ and R₄ are each independently selected from methyl, ethyl, n-propyl, isopropyl, n-butyl, tert-butyl, sec-butyl, n-pentyl, sec-pentyl or hexyl, etc. The selection of the above groups is conducive to the formation of a further stable SEI film, thereby improving the cycling performance of the battery.

In some embodiments, the organic solvent includes at least one of the following compounds:

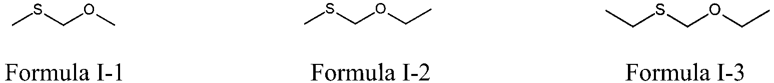

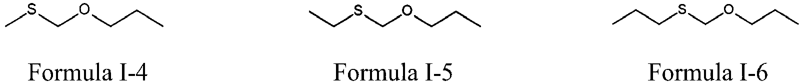

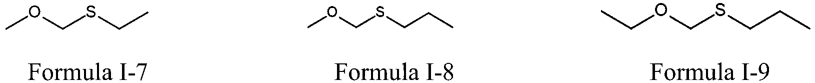

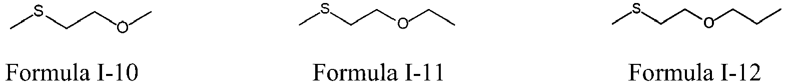

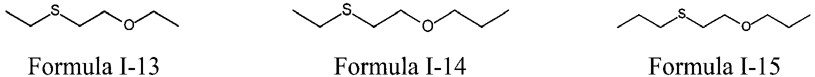

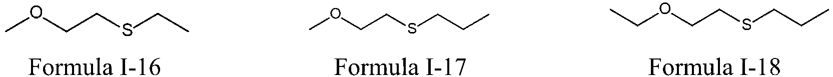

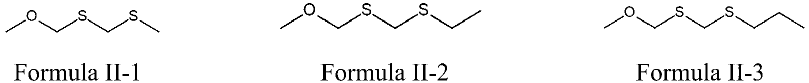

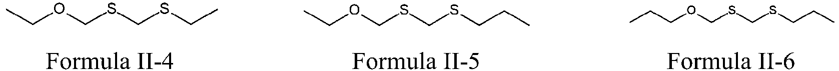

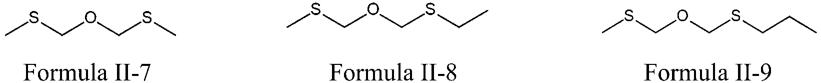

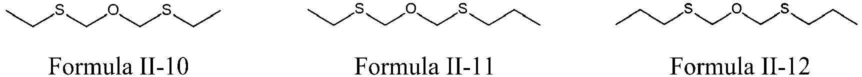

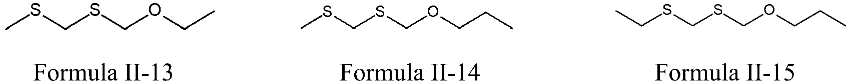

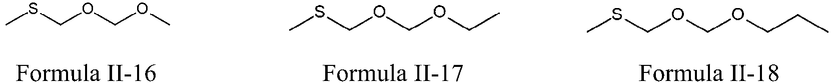

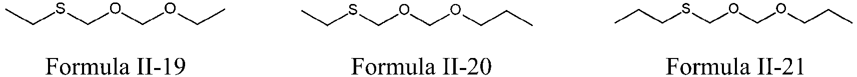

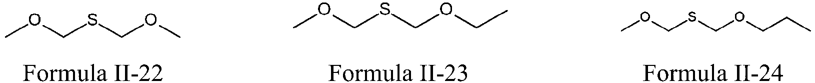

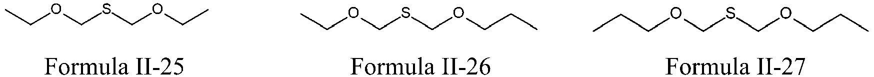

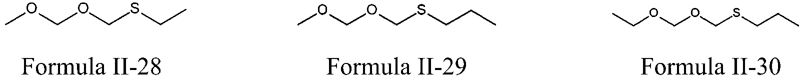

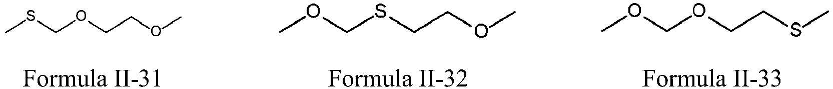

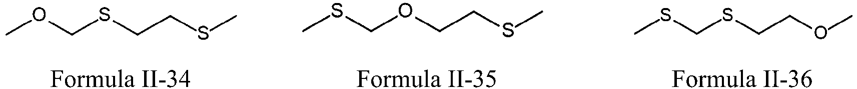

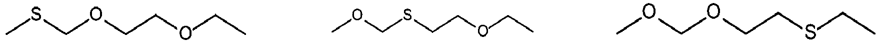

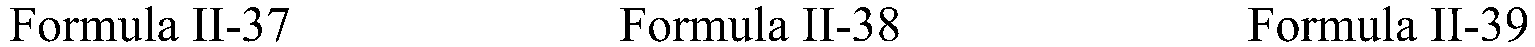

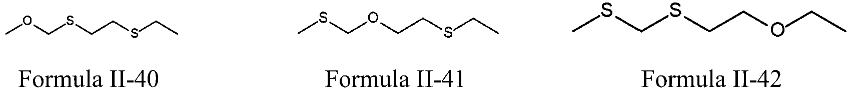

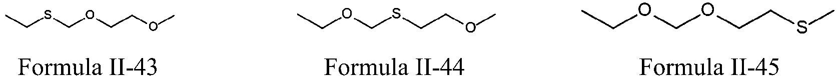

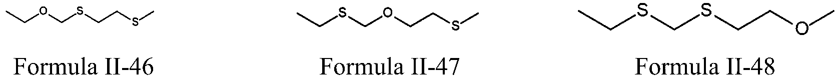

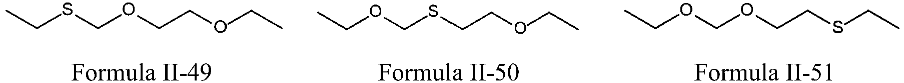

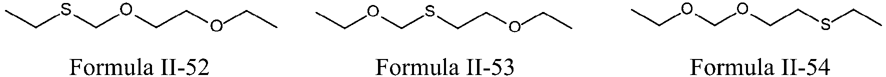

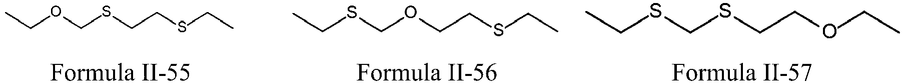

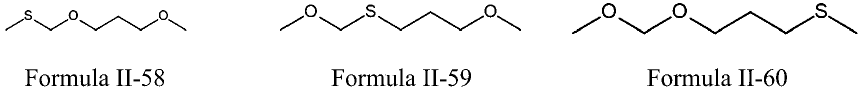

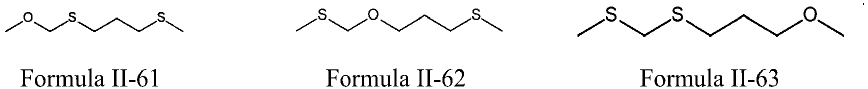

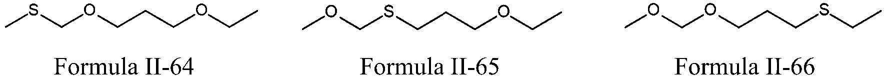

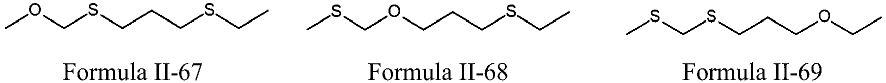

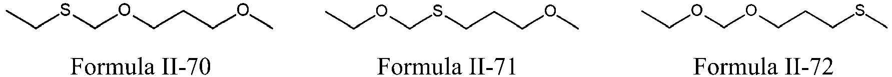

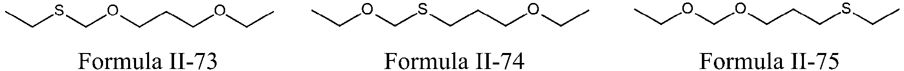

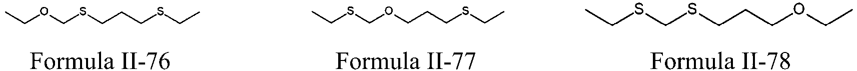

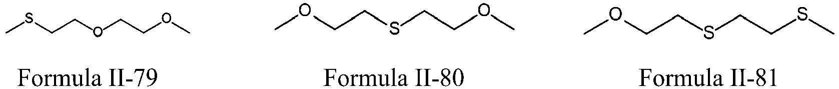

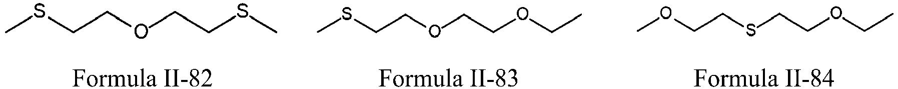

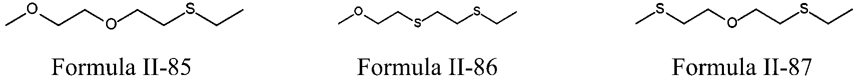

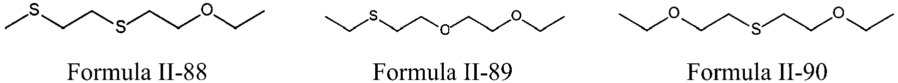

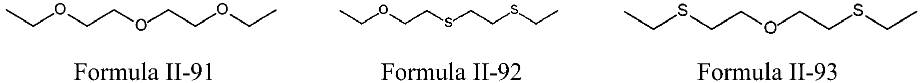

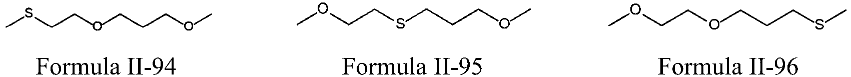

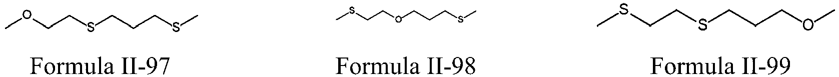

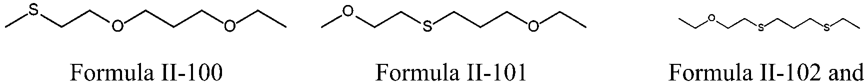

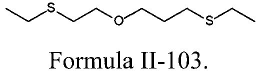

The above-mentioned organic solvents are conducive to the formation of a further stable SEI film, increasing the boiling point of the electrolyte solution, and thus improving the cycling performance of the battery.

In some embodiments, the organic solvent includes at least one of the compounds represented by Formula (I), and in Formula (I), k is 2, R₁ and R₂ are each independently selected from C1-C4 alkyl, optionally from methyl group or ethyl.

In some embodiments, the organic solvent includes at least one of the following compounds:

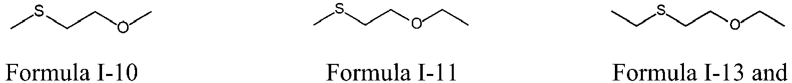

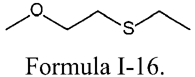

In the above embodiment, the sulfur atom and the oxygen atom are separated by two carbon atoms, which is a moderate distance, so that the organic solvent can achieve a higher ionic conductivity after combining with the lithium ions. Therefore, during the battery cycle, not only is a more compact and stable SEI film with more inorganic components formed, but it also has a higher ionic conductivity, thereby improving the cycling performance of the battery.

In some embodiments, the boiling point range of the organic solvent is between 40 and 150°C, for example, 45°C-150°C, 50°C-150°C, 55°C-150°C, 60°C-150°C, 65°C-150°C, 70°C-150°C, 75°C-150°C, 80°C-150°C, 85°C-150°C, 90°C-150°C, 95°C-150°C, 100°C-150°C, 110°C-150°C, 120°C-150°C, 130°C-150°C, 140°C-150°C, etc, under 1 atm.

When the organic solvent has a higher boiling point, it helps the electrolyte solution containing the organic solvent to also achieve a higher boiling point, so that the electrolyte solution does not easily volatilize and can also results in better cycling performance.

In some embodiments, the lithium salt includes at least one of lithium bis(fluorosulfonyl)imide, lithium hexafluorophosphate, lithium tetrafluoroborate, lithium hexafluoroarsenate, lithium bis(trifluoromethanesulfonyl)imide, lithium trifluoromethanesulfonate, lithium difluorophosphate, lithium bis(oxalato)borate, lithium difluoro(oxalato)borate, lithium difluorobis(oxalato)phosphate and lithium tetrafluoro(oxalato)phosphate. The above lithium salt is convenient and easy to obtain, and has a high solubility in the electrolyte solution, so that the electrolyte solution has a high conductivity, thereby endowing the battery with good cycling performance.

In some embodiments, the concentration of the lithium salt in the electrolyte solution is 0.1-4 mol/L; optionally, the concentration of the lithium salt ranges from 1-3 mol/L. The formula for calculating the lithium salt concentration is (moles of lithium salt/total volume of electrolyte solution) × 100%. Optionally, the concentration of the lithium salt is in a range of 1.5 to 3.5 mol/L, for example 2 mol/L.

Here, the concentration of lithium salt in the electrolyte solution can be either end point value or any value between the end points, for example, 0.2 mol/L, 0.3 mol/L, 0.4 mol/L, 0.5 mol/L, 0.6 mol/L, 0.8 mol/L, 1 mol/L, 1.2 mol/L, 1.4 mol/L, 1.6 mol/L, 1.8 mol/L, 2 mol/L, 2.2 mol/L, 2.4 mol/L, 2.6 mol/L, 2.8 mol/L, 3 mol/L, 3.2 mol/L, 3.4 mol/L, 3.6 mol/L, 3.8 mol/L, etc.

By controlling the concentration of the lithium salt in the electrolyte solution within the above range, the diffusion of lithium ions can be facilitated, so that the electrolyte solution thus provided has a higher ion conductivity.

In some embodiments, the anion coordination number of Li in the first solvation shell may be greater than or equal to 3. A higher anion coordination number is conducive to the formation of a stable SEI film rich in inorganics, thereby improving the cycling performance of the battery.

In some embodiments, the diluent includes at least one of fluorine-containing alkanes, ethers, and silane compounds. Optionally, the diluent includes at least one of decafluoropentane, 1,1,2,2-tetrafluoroethyl-2,2,3,3-tetrafluoropropyl ether, (trifluoromethyl)trimethylsilane and (difluoromethyl)dimethylsilane. Selecting the above diluents can achieve the effective adjustment of the solvation structure, and reducing the viscosity of the electrolyte solution to improve the cycling performance of the battery.

In some embodiments, in the electrolyte solution of the embodiments of the present disclosure, the volume ratio of the organic solvent to the diluent is σ, where 1 : 9 ≤ σ ≤ 9 : 1; optionally, 2 : 5 ≤ σ ≤ 5 : 2; optionally, 3 : 4 ≤ σ ≤ 4 : 3; optionally, σ = 2 : 5.

Here, the value of σ can be, but is not limited to either the end point value or any value between the end points, for example, 2 : 9, 3 : 9, 4 : 9, 5 : 9, 6 : 9, 7 : 9, 8 : 9, 2 : 5, 3 : 5, 4 : 5, 9 : 1, 9 : 2, 9 : 3, 9 : 4, 9 : 5, 9 : 6, 9 : 7, 9 : 8, 5 : 2, 5 : 3, 5 : 4, etc.

Adjusting the ratio of organic solvent and diluent can facilitates the reduction of the solvation effect, increase the anion coordination number, and achieve the purpose of adjusting the solvation structure, thereby improving the stability of the SEI film and further improving the cycling performance of the battery.

In some embodiments, the boiling point of the electrolyte solution is higher than 105°C; optionally, higher than 115°C; optionally, higher than 125°C, under 1 atm.

The boiling point of the electrolyte solution may be, but is not limited to, for example, higher than 105°C, higher than 110°C, higher than 115°C, higher than 120°C, higher than 125°C, higher than 130°C, higher than 135°C, higher than 140°C, higher than 145°C, higher than 150°C, higher than 155°C, higher than 160°C, higher than 165°C, higher than 170°C, higher than 175°C, etc.

Compared to an electrolyte solution using an ether solvent containing no sulfur atom, the electrolyte solution in the embodiment of the present disclosure has a higher boiling point and is less volatile, so that the electrolyte solution has improved thermal stability and cycling performance, thereby broadening the operating temperature range of the electrolyte solution.

In some embodiments, the electrolyte solution also includes other organic solvents, for example, at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally includes an additive. For example, the additive may include a negative electrode film forming additive, a positive electrode film forming additive, and may further include an additive that can improve particular battery performance, for example, an additive that improves battery overcharging performance, an additive that improves high-temperature or low-temperature performance of the battery, or the like.

The present disclosure also provides a lithium metal secondary battery and an electrical device.

The lithium metal secondary battery and the electrical device of the present disclosure will be described below with reference to the drawings as appropriate.

In some embodiments of the present disclosure, a lithium metal secondary battery is provided.

The term "secondary battery" mentioned herein refers to a battery cell, a battery module or a battery pack. Detailed descriptions are separately provided below.

Generally, the secondary battery includes a positive electrode plate, a negative electrode plate, an electrolyte, and a separator. During the charge/discharge of the battery, active ions are intercalated and de-intercalated back and forth between the positive electrode plate and the negative electrode plate. The electrolyte plays a role in conducting ions between the positive electrode plate and negative electrode plate. The separator is disposed between the positive electrode plate and the negative electrode plate to mainly play a role in preventing a short circuit between a positive electrode and a negative electrode while allowing ions to pass through.

### Positive electrode plate

The positive electrode plate includes a positive electrode current collector and a positive electrode film layer disposed on at least one side of the positive electrode current collector, and the positive electrode film layer includes a positive electrode active material.

As an example, the positive electrode current collector has two opposite sides in a thickness direction thereof, and the positive electrode film layer is disposed on either or both of the two opposite sides of the positive electrode current collector.

In some embodiments, the positive electrode current collector may be a metal foil or a composite current collector. For example, as a metal foil, an aluminum foil may be used. The composite current collector can include a polymer material substrate and a metal layer formed on at least one side of the polymer material substrate. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, when the battery cell is a lithium ion battery, the positive electrode active material may be a positive electrode active material for a lithium ion battery known in the art. As an example, the positive electrode active material may include at least one of the following materials: lithium-containing phosphates of an olivine structure, lithium transition metal oxides, and their respective modified compounds. However, the present disclosure is not limited to such materials, and another conventional material that may be used as a positive electrode active material for a battery may also be used. Only one or a combination of two or more of these positive electrode active materials may be used. Herein, examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), and LiNi_{0.8}Co_{0.1}Mn_{0.1}O₂ (also referred to as NCM₈₁₁)), lithium nickel cobalt aluminum oxide (e.g., LiNi_{0.85}Co_{0.15}Al_{0.05}O₂), and modified compounds thereof. Examples of lithium-containing phosphates of an olivine-structure include, but are not limited to, at least one of lithium iron phosphate (e.g., LiFePO₄,LiFeP_{2O7}, Li₃Fe₂(PO₄)₃, LiFe₄(P₂O₇)₃; also referred to as LFP), a composite materials of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon.

The battery is accompanied by Li intercalation and de-intercalatation and consumption during the charging and discharging process, and the molar content of Li is different when the battery is discharged to different states. In the list of positive electrode active materials in the present disclosure, the molar content of Li refers to the initial state of the material, that is, the state before feeding. When the positive electrode active materials are used in a battery system, the molar content of Li will change after charge and discharge cycles.

In the list of positive electrode active materials in the present disclosure, the molar content of O is only a theoretical value. The release of oxygen from the lattice will cause a change in the molar content of oxygen, and the actual molar content of O will fluctuate.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared as follows: dispersing the above components for preparing the positive electrode plate, for example, the positive electrode active material, the conductive agent, the binder, and any other components, in a solvent (for example N-methylpyrrolidone) to form a positive electrode slurry; and coating the positive electrode slurry onto a positive electrode current collector, followed by processes such as drying and cold pressing, to obtain the positive electrode plate.

### Negative electrode plate

A negative electrode plate includes a negative electrode current collector and a negative electrode film layer disposed on at least one side of the negative electrode current collector.

As an example, the negative electrode current collector has two opposite sides in its own thickness direction, and the negative electrode film layer is disposed on either or both of the two opposite sides of the negative electrode current collector.

In some embodiments, the negative electrode current collector may be a metal foil or a composite current collector. For example, as a metal foil, a copper foil may be used. The composite current collector can include a polymer material substrate and a metal layer formed on at least one side of the polymer substrate. The composite current collector may be formed by forming a metal material (copper, a copper alloy, nickel, a nickel alloy, titanium, a titanium alloy, silver, a silver alloy, or the like) on the polymer material substrate (for example, a substrate of polypropylene (PP), polyethylene terephthalate (PET), polybutylene terephthalate (PBT), polystyrene (PS), or polyethylene (PE)).

In some embodiments, the negative electrode film layer includes elemental lithium and/or a lithium alloy. Lithium alloy refers to an alloy formed by metal lithium and other metal or non-metal elements. The metal element may include, but is not limited to tin (Sn), zinc (Zn), aluminum (Al), magnesium (Mg), silver (Ag), gold (Au), gallium (Ga), indium (In), platinum (Pt), etc. The non-metal elements may include, but are not limited to boron (B), carbon (C), silicon (Si), etc. A battery including the above-mentioned material as a negative electrode active material may have a lower reduction potential and/or a higher theoretical energy density.

In some embodiments, the negative electrode plate can be prepared by the following method: a lithium foil and/or a lithium alloy is coated onto the negative electrode current collector by rolling to obtain the negative electrode plate.

### Electrolyte

The electrolyte plays a role in conducting ions between the positive electrode plate and negative electrode plate. In the embodiment of the present disclosure, the electrolyte used is the electrolyte solution for a lithium metal secondary battery described in the embodiment of the present disclosure.

### Separator

In some embodiments, the battery cell further includes a separator. The type of the separator is not particularly limited in the present disclosure, and any well-known separator with a porous structure having good chemical stability and mechanical stability may be selected.

In some embodiments, a material of the separator may be at least one selected from glass fibers, non-woven fabrics, polyethylene, polypropylene, and polyvinylidene fluoride. The separator can be a single-layer film or a multilayer composite film without special limitations. When the separator is a multilayer composite film, materials of layers may be the same or different without special limitations.

In some embodiments, the positive electrode plate, the negative electrode plate, and the separator can be made into an electrode assembly by a winding process or a lamination process.

In some embodiments, the battery cell may include an outer package. The outer package can be used to encapsulate the above electrode assembly and electrolyte.

In some embodiments, the outer package of the battery cell may be a hard shell, such as a hard plastic case, an aluminum shell, or a steel shell. The outer package of the battery cell may be a soft package such as a pouch-type soft package. A material of the soft package may be a plastic, and examples of plastic may include polypropylene, polybutylene terephthalate, polybutylene succinate, and the like.

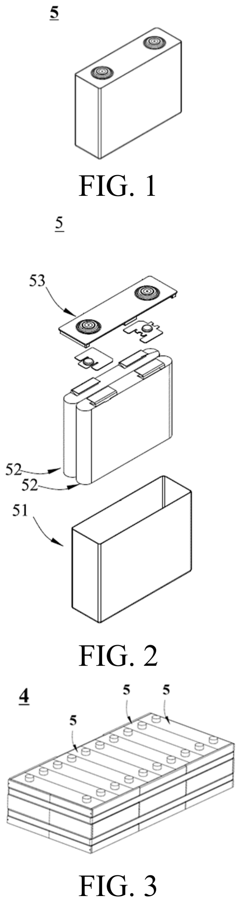

The present disclosure has no particular limitation on the shape of the battery cell, which can be cylindrical, prismatic or any other shape. FIG. 1 shows a prismatic battery cell 5 as an example.

In some embodiments, referring to FIG. 2, an outer package may include a case 51 and a top cover assembly 53. The case 51 may include a bottom plate and a side plate connected to the bottom plate, and an accommodating cavity is enclosed by the bottom plate and the side plate. The case 51 has an opening in communication with the accommodating cavity, and the top cover assembly 53 may cover the opening to close the accommodating cavity. The positive electrode plate, the negative electrode plate, and the separator may be made into an electrode assembly 52 by a winding process or a laminating process. The electrode assembly 52 is encapsulated in the accommodating cavity. An electrolyte solution infiltrates into the electrode assembly 52. The number of electrode assemblies 52 contained in the battery cell 5 may be one or more, and may be selected by a person skilled in the art according to actual requirements.

In some embodiments, the battery cell can be assembled into a battery module, the number of battery cells contained in the battery module can be one or more, and the specific number can be selected by those skilled in the art according to the application and capacity of the battery module.

FIG. 3 shows a battery module 4 as an example. Referring to FIG. 3, in the battery module 4, multiple battery cells 5 may be sequentially disposed in the length direction of the battery module 4. Certainly, the multiple battery cells can be arranged in any other way. The multiple battery cells 5 may further be fixed by fasteners.

Optionally, the battery module 4 may further include a shell having an accommodating space, in which the multiple battery cells 5 are accommodated.

In some embodiments, the battery module may further be assembled into a battery pack, the number of battery modules contained in the battery pack may be one or more, and the specific number can be selected by those skilled in the art according to the use and capacity of the battery pack.

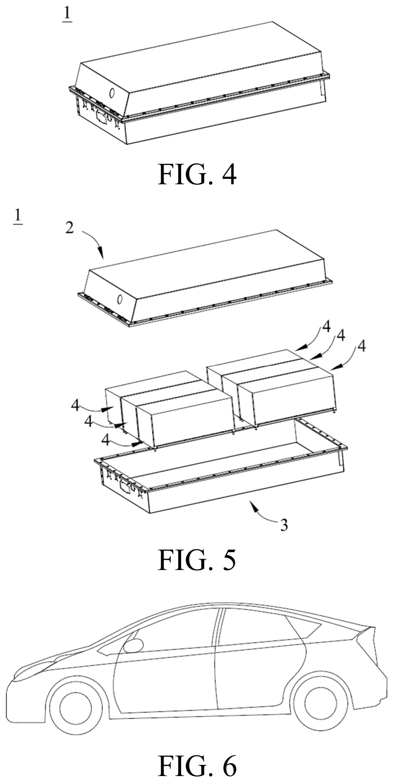

FIG. 4 and FIG. 5 show a battery pack 1 as an example. Referring to FIG. 4 and FIG. 5, the battery pack 1 may include a battery box and multiple battery modules 4 provided in the battery box. The battery box includes an upper box 2 and a lower box 3. The upper box 2 can cover the lower box 3 to form a closed space for accommodating the battery modules 4. The multiple battery modules 4 may be arranged in the battery box in any manner.

In addition, the present disclosure further provides an electrical device. The electrical device includes the secondary battery provided in the present disclosure. The secondary battery can be used as a power source for the electrical device, and can also be used as an energy storage unit for the electrical device. The electrical device may include, but is not limited to, a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

As for the electrical device, the battery cell, the battery module, or the battery pack may be selected according to use requirements.

FIG. 6 shows an electrical device as an example. The electrical device is an all-electric vehicle, a hybrid electric vehicle, or a plug-in hybrid electric vehicle, etc. To meet the requirements of the electrical device for a high power and a high energy density of secondary batteries, a battery pack or a battery module may be used.

The device used as another example may be, for example, a mobile phone, a tablet computer, and a laptop, etc. The device usually needs to be light and thin, and the battery cell may be used as a power source.

### Embodiments

Hereinafter, embodiments of the present disclosure will be described. The embodiments described below with reference to the accompanying drawings are exemplary, and are merely intended to explain the present disclosure and cannot be construed as a limitation to the present disclosure. If the specific technology or conditions are not specified in the embodiments, the technology or conditions described in the literature in the art or the product manual shall be followed. The reagents or instruments without manufacturer indicated are all conventional products that may be purchased in the market.

Preparation Example: Preparation of compound of Formula I-10

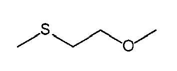

Referring to, for example, Bull. Chem. Soc. Jpn, 50, 1977, 650, the compound of Formula I-10 can be synthesized by the following route:

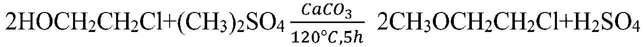

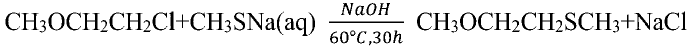

The resulting product can be purified by distillation process at 135°C.

The above documents are incorporated herein in their entirety by reference.

Here, with the compound of Formula I-10 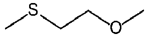 as an example, the preparation method for the organic solvent in the embodiment of the present disclosure is described. Regarding other exemplary organic solvents involved herein, those skilled in the art can obtain them by referring to the above preparation methods or by purchasing them commercially, which will not be described in detail here.

Formula I-10 has a boiling point of 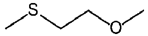 134-135°C, which is higher than the boiling point of ethylene glycol dimethyl ether of 82-83°C. By introducing at least one sulfur atom into a common ether solvent (which does not contain any sulfur atoms), the boiling point of the solvent can be increased. Therefore, the use of the organic solvent in the embodiment of the present disclosure can increase the boiling point of the electrolyte solution.

### Embodiment 1-Embodiment 13

2 mol of lithium bis(fluorosulfonyl)imide salt was added to a mixed solution of 286 ml of the organic solvent of the embodiment of the present disclosure (as shown in Table 1) and 714 ml of 1,1,2,2-tetrafluoroethyl-2,2,3,3-tetrafluoropropyl ether, and mixed uniformly to form a colorless, transparent, uniform solution with a volume of 1 liter, to obtain the electrolyte solutions of Embodiments 1-13. The lithium salt concentration was 2 mol/L.

### Embodiment 14-Embodiment 17

2 mol of lithium bis(trifluoromethylsulfonyl)imide was added to a mixed solution of 286 ml of the organic solvent of the embodiment of the present disclosure (one of Formula I-10, Formula I-11, Formula I-13 and Formula I-16, respectively) and 714 ml of 1,1,2,2-tetrafluoroethyl-2,2,3,3-tetrafluoropropyl ether, and mixed uniformly to form a colorless, transparent, uniform solution with a volume of 1 liter, to obtain the electrolyte solutions of Embodiments 14-17.

### Embodiment 18-Embodiment 21

2 mol of lithium bis(fluorosulfonyl)imide was added to a mixed solution of 286 ml of the organic solvent of the embodiment of the present disclosure (one of Formula I-10, Formula I-11, Formula I-13 and Formula I-16, respectively) and 714 ml of decafluoropentane, and mixed uniformly to form a colorless, transparent, uniform solution with a volume of 1 liter, to obtain the electrolyte solutions of Embodiments 18-21.

### Embodiment 22-Embodiment 25

2 mol of lithium bis(fluorosulfonyl)imide was added to a mixed solution of 714 ml of the organic solvent of the embodiment of the present disclosure (one of Formula I-10, Formula I-11, Formula I-13 and Formula I-16, respectively) and 286 ml of (trifluoromethyl)trimethylsilane, and mixed uniformly to form a colorless, transparent, uniform solution with a volume of 1 liter, to obtain the electrolyte solutions of Embodiments 22-25.

### Embodiment 26-Embodiment 27

2 mol of lithium bis(fluorosulfonyl)imide was added to a mixed solution of 100 ml of an organic solvent of Formula I-10 and 900 ml of (difluoromethyl)dimethylsilane, and mixed uniformly to form a colorless, transparent, uniform solution with a volume of 1 liter, to obtain the electrolyte solution of Embodiment 26.

2 mol of lithium bis(fluorosulfonyl)imide was added to a mixed solution of 900 ml of an organic solvent of Formula I-10 and 100 ml of (difluoromethyl)dimethylsilane, and mixed uniformly to form a colorless, transparent, uniform solution with a volume of 1 liter, to obtain the electrolyte solution of Embodiment 27.

### Comparative Example 1

3 ml of ethylene carbonate and 7 ml of dimethyl carbonate were mixed to form a colorless transparent solution, 3 g of lithium hexafluorophosphate was added to the transparent solution, and stirred thoroughly to form a colorless transparent solution with a concentration of 2 M, to obtain the electrolyte solution of Comparative Example 1.

### Comparative Example 2

2 mol of lithium bis(fluorosulfonyl)imide was added to 286 ml of ethylene glycol dimethyl ether (CH₃OCH₂CH₂OCH₃, DMET) and 714 ml of 1,1,2,2-tetrafluoroethyl-2,2,3,3-tetrafluoropropyl ether, and stirred thoroughly to form a colorless transparent solution with a volume of 1 liter, to obtain the electrolyte solution of Comparative Example 2.

### Comparative Example 3

2 mol of lithium bis(fluorosulfonyl)imide was added to 286 ml of 1,2-dimethylthioethane (CH₃SCH₂CH₂SCH₃, 1,2-bis(methylthio)ethane, BMTE) and 714 ml of 1,1,2,2-tetrafluoroethyl-2,2,3,3-tetrafluoropropyl ether, stirred thoroughly to form a colorless transparent solution with a volume of 1 liter, to obtain the electrolyte solution of Comparative Example 3.

The electrolyte solutions obtained in the above Embodiments 1-27 and Comparative Examples 1-3 were made into secondary batteries, for the room temperature cycling performance test of the secondary batteries.

### Preparation of positive electrode plate

The positive electrode active material of lithium nickel cobalt manganese oxide (NMC₆₂₂, LiNi_{0.6}Co_{0.2}Mn_{0.2}O₂), a conductive agent of acetylene black, and a binder of PVDF were mixed in a mass ratio of 98 : 1 : 1, and a solvent of N-methylpyrrolidone (NMP) was added and stirred until the system became uniform to obtain a positive electrode slurry. The positive electrode slurry was uniformly coated onto both sides of a positive electrode current collector of an aluminum foil, dried at room temperature, transferred to an oven for further drying, and then cut into a 40 mm * 50 mm rectangle as a positive electrode plate. The positive electrode surface capacity was 3.5 mAh/cm².

### Preparation of negative electrode plate

A 50 µm lithium foil was rolled onto a 13 µm copper foil and then cut into a 41 mm * 51 mm rectangle as a negative electrode plate for use.

### Preparation of separator

A polyethylene porous film was selected as the separator.

### Preparation of secondary battery

A cut positive electrode plate was matched with two cut negative electrode plates, and the above separator was used between the positive and negative electrode plates for isolation, followed by wrapping in an aluminum-plastic film bag to form a laminated dry battery cell. 0.3 g of the prepared electrolyte solution was injected, the aluminum-plastic film bag was sealed by vacuum hot pressing, and left to stand at room temperature for at least 6 hours before starting the cycle test. The laminated battery prepared in this way has a rated capacity of 140 mAh.

### Normal temperature cycling performance test

Normal temperature battery cell cycle: the ambient temperature for the battery cell cycle was set to 25°C, and the charge and discharge cycling was performed at a rate of 0.5C (i.e. 70 mA). The cut-off voltages for charge and discharge were set to 4.3 V and 2.8 V, respectively. When the discharge capacity decays to 80% of the first-cycle discharge capacity, the battery is considered to have reached its end of life.

The test results are shown in Table 1 below:

**Table 1: Electrolyte solution composition and battery cycling performance**

| Serial number | Electrolyte solution | | | | | battery |
|---|---|---|---|---|---|---|
| | Lithium salt | Organic solvent | Diluent | Volume ratio σ | Boiling point of electrolyte solution at 1 atm (°C) | Number of cycles at 25°C |
| Embodiment 1 | Lithium bis(fluorosulfonyl)imide | I-1 | 1,1,2,2-Tetrafluoroethyl-2,2,3,3-tetrafluoropropyl ether | 2:5 | 158 | 587 |
| Embodiment 2 | Lithium bis(fluorosulfonyl)imide | I-10 | 1,1,2,2-Tetrafluoroethyl-2,2,3,3-tetrafluoropropyl ether | 2:5 | 189 | 798 |
| Embodiment 3 | Lithium bis(fluorosulfonyl)imide | I-11 | 1,1,2,2-Tetrafluoroethyl-2,2,3,3-tetrafluoropropyl ether | 2:5 | 187 | 734 |
| Embodiment 4 | Lithium bis(fluorosulfonyl)imide | I-12 | 1,1,2,2-Tetrafluoroethyl-2,2,3,3-tetrafluoropropyl ether | 2:5 | 145 | 582 |
| Embodiment 5 | Lithium bis(fluorosulfonyl)imide | I-13 | 1,1,2,2-Tetrafluoroethyl-2,2,3,3-tetrafluoropropyl ether | 2:5 | 181 | 777 |
| Embodiment 6 | Lithium bis(fluorosulfonyl)imide | I-14 | 1,1,2,2-Tetrafluoroethyl-2,2,3,3-tetrafluoropropyl ether | 2:5 | 154 | 598 |
| Embodiment 7 | Lithium bis(fluorosulfonyl)imide | I-15 | 1,1,2,2-Tetrafluoroethyl-2,2,3,3-tetrafluoropropyl ether | 2:5 | 155 | 546 |
| Embodiment 8 | Lithium bis(fluorosulfonyl)imide | I-16 | 1,1,2,2-Tetrafluoroethyl-2,2,3,3-tetrafluoropropyl ether | 2:5 | 186 | 787 |
| Embodiment 9 | Lithium bis(fluorosulfonyl)imide | I-17 | 1,1,2,2-Tetrafluoroethyl-2,2,3,3-tetrafluoropropyl ether | 2:5 | 145 | 532 |
| Embodiment 10 | Lithium bis(fluorosulfonyl)imide | I-18 | 1,1,2,2-Tetrafluoroethyl-2,2,3,3-tetrafluoropropyl ether | 2:5 | 150 | 583 |
| Embodiment 11 | Lithium bis(fluorosulfonyl)imide | II-1 | 1,1,2,2-Tetrafluoroethyl-2,2,3,3-tetrafluoropropyl ether | 2:5 | 148 | 538 |
| Embodiment 12 | Lithium bis(fluorosulfonyl)imide | II-79 | 1,1,2,2-Tetrafluoroethyl-2,2,3,3-tetrafluoropropyl ether | 2:5 | 138 | 423 |
| Embodiment 13 | Lithium bis(fluorosulfonyl)imide | II-103 | 1,1,2,2-Tetrafluoroethyl-2,2,3,3-tetrafluoropropyl ether | 2:5 | 149 | 467 |
| Embodiment 14 | Lithium bis(trifluoromethylsulfonyl)imide | I-10 | 1,1,2,2-Tetrafluoroethyl-2,2,3,3-tetrafluoropropyl ether | 2:5 | 160 | 679 |
| Embodiment 15 | Lithium bis(trifluoromethylsulfonyl)imide | I-11 | 1,1,2,2-Tetrafluoroethyl-2,2,3,3-tetrafluoropropyl ether | 2:5 | 175 | 665 |
| Embodiment 16 | Lithium bis(trifluoromethylsulfonyl)imide | I-13 | 1,1,2,2-Tetrafluoroethyl-2,2,3,3-tetrafluoropropyl ether | 2:5 | 174 | 698 |
| Embodiment 17 | Lithium bis(trifluoromethylsulfonyl)imide | I-16 | 1,1,2,2-Tetrafluoroethyl-2,2,3,3-tetrafluoropropyl ether | 2:5 | 167 | 634 |
| Embodiment 18 | Lithium bis(fluorosulfonyl)imide | I-10 | Decafluoropentane | 2:5 | 166 | 659 |
| Embodiment 19 | Lithium bis(fluorosulfonyl)imide | I-11 | Decafluoropentane | 2:5 | 164 | 639 |
| Embodiment 20 | Lithium bis(fluorosulfonyl)imide | I-13 | Decafluoropentane | 2:5 | 170 | 687 |
| Embodiment 21 | Lithium bis(fluorosulfonyl)imide | I-16 | Decafluoropentane | 2:5 | 160 | 620 |
| Embodiment 22 | Lithium bis(fluorosulfonyl)imide | I-10 | (Trifluoromethyl)trimethylsilane | 5:2 | 163 | 618 |
| Embodiment 23 | Lithium bis(fluorosulfonyl)imide | I-11 | (Trifluoromethyl)trimethylsilane | 5:2 | 159 | 628 |
| Embodiment 24 | Lithium bis(fluorosulfonyl)imide | I-13 | (Trifluoromethyl)trimethylsilane | 5:2 | 160 | 653 |
| Embodiment 25 | Lithium bis(fluorosulfonyl)imide | I-16 | (Trifluoromethyl)trimethylsilane | 5:2 | 163 | 639 |
| Embodiment 26 | Lithium bis(fluorosulfonyl)imide | I-10 | (Difluoromethyl)dimethylsilane | 1:9 | 108 | 502 |
| Embodiment 27 | Lithium bis(fluorosulfonyl)imide | I-10 | (Difluoromethyl)dimethylsilane | 9:1 | 187 | 589 |
| Comparative Example 1 | Mixed solution of 3 g lithium hexafluorophosphate, 3 ml ethylene carbonate, 7ml dimethyl carbonate | | | / | 122 | 120 |
| Comparative Example 2 | Lithium bis(fluorosulfonyl)imide | DMET | 1,1,2,2-Tetrafluoroethyl-2,2,3,3-tetrafluoropropyl ether | 2:5 | 115 | 389 |
| Comparative Example 3 | Lithium bis(fluorosulfonyl)imide | BMTE | 1,1,2,2-Tetrafluoroethyl-2,2,3,3-tetrafluoropropyl ether | 2:5 | 180 | 356 |

In Embodiments 1 to 13, lithium bis(fluorosulfonyl)imide was used as the lithium salt, 1,1,2,2-tetrafluoroethyl-2,2,3,3-tetrafluoropropyl ether was used as the diluent, and the compounds of Formulas I-1, I-10 to I-18, II-1, II-79 and II-103 were each used as the organic solvent to prepare the electrolyte solution. In Comparative Example 1, a carbonate solution of lithium hexafluorophosphate commonly used in the related art was used as the electrolyte solution. According to the test results in Table 1, the batteries using the electrolyte solutions of Embodiments 1 to 13 all exhibit cycling performance significantly better than that of the battery using the electrolyte solution of Comparative Example 1.

In Embodiments 14 to 17, lithium bis(trifluoromethylsulfonyl)imide was used instead of the lithium salt of lithium bis(fluoromethylsulfonyl)imide in Embodiments 2, 3, 5 and 8; in Embodiments 18 to 21, decafluoropentane was used instead of the diluent of 1,1,2,2-tetrafluoroethyl-2,2,3,3-tetrafluoropropyl ether in Embodiments 2, 3, 5 and 8; in Embodiments 22 to 25, σ was 5:2 instead of 2:5 in Embodiments 2, 3, 5 and 8, and (trifluoromethyl)trimethylsilane was used instead of 1,1,2,2-tetrafluoroethyl-2,2,3,3-tetrafluoropropyl ether in Embodiments 2, 3, 5 and 8; in Embodiment 26, σ was 1:9 instead of 2:5 in Embodiment 2, and (difluoromethyl)dimethylsilane was used instead of 1,1,2,2-tetrafluoroethyl-2,2,3,3-tetrafluoropropyl ether in Embodiment 2; in Embodiment 27, σ was 9:1 instead of 2:5 in Embodiment 2, and (difluoromethyl)dimethylsilane was used instead of 1,1,2,2-tetrafluoroethyl-2,2,3,3-tetrafluoropropyl ether in Embodiment 2. Although in the above embodiments one of the type of lithium salt, the type of diluent, and the σ ratio was changed compared to Embodiment 2, 3, 5, and 8, these embodiments also show significantly superior cycling performance compared to Comparative Example 1.

The difference between Comparative Example 2 and Embodiment 2 was that ethylene glycol dimethyl ether DMET (CH₃OCH₂CH₂OCH₃) was used instead of the organic solvent of Formula I-10 in Embodiment 2. It can be seen from Table 1 that the number of cycles of the battery prepared using the electrolyte solution of Embodiment 2 is 798, while the number of cycles of the battery prepared using the electrolyte solution of Comparative Example 2 is 389. The test results show that although the electrolyte solution of Comparative Example 2 can be cycled in a lithium metal secondary battery system at room temperature, its cycling performance is worse than that of Embodiment 2. On the other hand, the boiling point of the electrolyte solution in Comparative Example 2 is also significantly lower than that in Embodiment 2 of the present disclosure.

The difference between Comparative Example 3 and Embodiment 2 is that 1,2-dimethylthioethane (CH₃SCH₂CH₂SCH₃) was used instead of the organic solvent of Formula I-10 in Embodiment 2. The test results show that although the boiling point of the electrolyte solution of Comparative Example 3 is higher than that of the electrolyte solution of Embodiment 2, the cycling performance is worse than that of Embodiment 2. Different from the case where the organic solvent in Embodiment 2 contains both oxygen atoms and sulfur atoms, the 1,2-dimethylthioethane in Comparative Example 3 contains two sulfur atoms and no oxygen atom. Since the nucleophilicity of sulfur atoms is weaker than that of oxygen atoms, the lithium salt in the electrolyte solution of Comparative Example 3 is not fully dissociated, resulting in a too low conductivity, which thus affects the stability of the SEI film. Meanwhile, the electrolyte solution of Comparative Example 3 also has the problem of poor oxidation resistance.

These test results indirectly indicate that the electrolyte solution of the embodiments of the present disclosure can form a stable SEI film on the negative electrode plate and improve the cycling performance of the battery, while the carbonate solvents, ethylene glycol dimethyl ether or 1,2-dimethylthioethane in the Comparative examples cannot form a stable SEI film on the surface of the negative electrode plate.

It should be noted that the present disclosure is not limited to the embodiments above. The above embodiments are merely exemplary, and embodiments having substantially the same technical idea and the same effects within the scope of the technical solution of the present disclosure are all included in the technical scope of the present disclosure. In addition, other embodiments constructed by applying various modifications conceivable to those skilled in the art to the embodiments and combining some of the constituent elements of the embodiments without departing from the scope of the essence of the present disclosure are also included in the scope of this present disclosure.

## Claims

1. An electrolyte solution for a lithium metal secondary battery, comprising a lithium salt, an organic solvent and a diluent; wherein the organic solvent comprises at least one of a compound represented by Formula (I) or a compound represented by Formula (II); 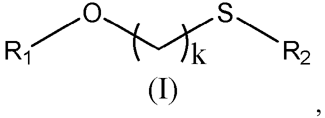 wherein
in Formula (I), R₁ and R₂ are each independently selected from C1-C10 alkyl, and k is an integer selected from 1-3; 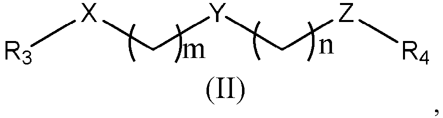 wherein
in Formula (II), X, Y, and Z are each independently selected from O or S, where for at least two of X, Y, and Z, one is O and the other is S; R₃ and R₄ are each independently selected from C1-C10 alkyl, and m and n are each independently an integer selected from 1-3.

2. The electrolyte solution according to claim 1, wherein in Formula (I), R₁ and R₂ are each independently selected from C1-C6 alkyl, optionally, selected from C1-C4 alkyl; and
in Formula (II), R₃ and R₄ are each independently selected from C1-C6 alkyl, optionally, selected from a C1-C4 alkyl.

3. The electrolyte solution according to claim 1 or 2, wherein the organic solvent comprises at least one of the compounds represented by Formula (I), and in Formula (I), k is 2, R₁ and R₂ are each independently selected from C1-C4 alkyl.

4. The electrolyte solution according to any one of claims 1 to 3, wherein the organic solvent comprises at least one of the following compounds:

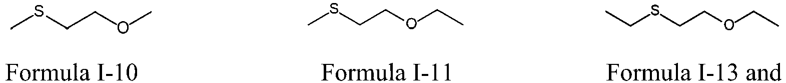

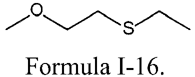

5. The electrolyte solution according to any one of claims 1-4, wherein in the electrolyte solution the lithium salt has a concentration of 0.1-4 mol/L, optionally 1-3 mol/L.

6. The electrolyte solution according to any one of claims 1 to 5, wherein, in the electrolyte solution, a volume ratio of the organic solvent to the diluent is σ, wherein 1 : 9 ≤ σ ≤ 9 : 1; optionally, 2 : 5 ≤ σ ≤ 5 : 2.

7. The electrolyte solution according to any one of claims 1 to 6, wherein the lithium salt comprises at least one of lithium bis(fluorosulfonyl)imide, lithium hexafluorophosphate, lithium tetrafluoroborate, lithium hexafluoroarsenate, lithium bis(trifluoromethanesulfonyl)imide, lithium trifluoromethanesulfonate, lithium difluorophosphate, lithium bis(oxalato)borate, lithium difluoro(oxalato)borate, lithium difluorobis(oxalato)phosphate and lithium tetrafluoro(oxalato)phosphate.

8. The electrolyte solution according to any one of claims 1 to 7, wherein the diluent comprises at least one of fluorine-containing alkanes, ethers and silane compounds; optionally, the diluent comprises at least one of decafluoropentane, 1,1,2,2-tetrafluoroethyl-2,2,3,3-tetrafluoropropyl ether, (trifluoromethyl)trimethylsilane and (difluoromethyl)dimethylsilane.

9. The electrolyte solution according to any one of claims 1-8, wherein the organic solvent has a boiling point in a range of 40°C to 150°C under 1 atm.

10. The electrolyte solution according to any one of claims 1 to 9, wherein the boiling point of the electrolyte solution is higher than 105°C; optionally, higher than 115°C; optionally, higher than 125°C, under 1 atm.

11. A lithium metal secondary battery, comprising the electrolyte solution according to any one of claims 1 to 10.

12. The lithium metal secondary battery according to claim 11, wherein the lithium metal secondary battery further comprises a negative electrode plate, the negative electrode plate comprises a negative electrode current collector and a negative electrode film layer disposed on at least one side of the negative electrode current collector, the negative electrode film layer comprises elemental lithium and/or a lithium alloy.

13. An electrical device, comprising the lithium metal secondary battery according to claim 11 or 12.
